(19) Europäisches Patentamt
European Patent Office
Office européen des brevets

(11) EP 3 504 220 B1

(12) # EUROPEAN PATENT SPECIFICATION

(45) Date of publication and mention of the grant of the patent:
**16.11.2022 Bulletin 2022/46**

(21) Application number: **17758915.7**

(22) Date of filing: **23.08.2017**

(51) International Patent Classification (IPC):
***C07G 1/00*** *(2011.01)* ***C08H 7/00*** *(2011.01)*
***C08B 37/00*** *(2006.01)*

(52) Cooperative Patent Classification (CPC):
**C08H 6/00; C07G 1/00; C08B 37/0057**

(86) International application number:
**PCT/GB2017/052482**

(87) International publication number:
**WO 2018/037226 (01.03.2018 Gazette 2018/09)**

(54) **PROCESS FOR THE PREPARATION OF BUTYLATED LIGNIN**

VERFAHREN ZUR HERSTELLUNG BUTYLIERTEN LIGNINS

PROCÉDÉ DE PRÉPARATION DE LIGNINE BUTYLÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2016 GB 201614578**

(43) Date of publication of application:
**03.07.2019 Bulletin 2019/27**

(73) Proprietor: **University Court of The University of St Andrews**
**St Andrews**
**Fife KY16 9AJ (GB)**

(72) Inventors:
- **WESTWOOD, Nicholas James**
  **St Andrews**
  **Fife KY16 9ST (GB)**
- **LANCEFIELD, Christopher Stuart**
  **St Andrews**
  **Fife KY16 9ST (GB)**

(74) Representative: **Marks & Clerk LLP**
**15 Fetter Lane**
**London EC4A 1BW (GB)**

(56) References cited:
- **F. E. BRAUNS ET AL: "Lignin Ethers and Esters - Preparation from Lead and Other Metallic Derivatives of Lignin", INDUSTRIAL AND ENGINEERING CHEMISTRY, vol. 37, no. 1, 1 January 1945 (1945-01-01), pages 70-73, XP55248087, US ISSN: 0019-7866, DOI: 10.1021/ie50421a015**
- **J Mark Lawther ET AL: "ISOLATION AND CHARACTERIZATION OF ORGANOSOLV LIGNINS FROM WHEAT STRAW Run-Cang Sun Senior Research Fellow", Wood and Fiber Science, 1 January 1998 (1998-01-01), pages 56-63, XP55412138, Retrieved from the Internet: URL:https://wfs.swst.org/index.php/wfs/article/viewFile/177/177 [retrieved on 2017-10-03]**
- **PETER J. DEUSS ET AL: "Aromatic Monomers by in Situ Conversion of Reactive Intermediates in the Acid-Catalyzed Depolymerization of Lignin", JOURNAL OF THE AMERICAN CHEMICAL SOCIETY, vol. 137, no. 23, 17 June 2015 (2015-06-17), pages 7456-7467, XP55412117, US ISSN: 0002-7863, DOI: 10.1021/jacs.5b03693 cited in the application**

EP 3 504 220 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- Luis F. Del Rio ET AL: "The Effect of Varying Organosolv Pretreatment Chemicals on the Physicochemical Properties and Cellulolytic Hydrolysis of Mountain Pine Beetle-Killed Lodgepole Pine", APPLIED BIOCHEMISTRY AND BIOTECHNOLOGY, vol. 161, no. 1-8, 8 October 2009 (2009-10-08), pages 1-21, XP055668312, New York ISSN: 0273-2289, DOI: 10.1007/s12010-009-8786-6

## Description

### Field of the Invention

The present invention which is defined in the claims relates to the processing of lignocellulosic biomass to provide useful products, in particular but not exclusively to the production of a modified lignin that is suitable for further processing towards useful products. Cellulose and hemicellulose products are also provided.

### Background to the Invention

Lignocellulosic biomass, which comprises cellulose, hemicellulose and lignin is the most abundant source of renewable carbon on the planet and has recently received a lot of attention as a potential source of energy, fuels and chemicals.

Whilst energy, in the form of heat or electricity, can be obtained by simply burning lignocellulosic biomass, the economically viable production of liquid fuels and chemicals from such biomass will require the implementation of high efficiency biorefineries to produce a range of renewable products.

Amongst attractive bio-refinery products is cellulosic ethanol which can be produced from non-food crops and used directly as a fuel or chemical feedstock. To produce cellulosic ethanol lignocellulosic biomass must first be converted to simple sugars (e.g. glucose) which are suitable for microbial fermentation. This can either be through a one-step direct chemical conversion to simple sugars or, more frequently, *via* a two-step process involving a pre-treatment followed by enzymatic hydrolysis. The latter approach is particularly attractive as it can, depending on the pre-treatment process chosen, provide an opportunity to separate and then process each of the cellulose, hemicellulose and lignin fractions under optimised upgrading conditions.

As an alternative to ethanol, the higher alcohol butanol (n-butanol) is obtainable from cellulosic biomass and may have certain advantages for uses such as in a fuel for internal combustion engines.

Many methods exist for the pre-treatment of lignocellulose such as SPORL (Sulfite Pretreatment to Overcome Recalcitrance of Lignocellulose), ammonia, auto-hydrolysis, dilute acid, steam explosion and alkali treatments.

However some of the most promising pre-treatment methods are based on organosolv pulping processes. In these processes the lignocellulosic biomass is typically heated in the presence of a mixed water-organic solvent, usually containing an acid catalyst, which solubilises the lignin and hemicellulose components and leaves an insoluble cellulose pulp suitable for enzymatic hydrolysis.

Unfortunately, the harsh conditions that are often employed lead to extensive structural modification of the lignin components which makes them difficult to valorise, especially by selective depolymerisation to aromatic monomers.

Lignin constitutes between 15-30% of the biomass and up to 40% of the energy content of most higher plants. Therefore methods of processing lignocellulose that render the lignin content accessible for the production of useful products are attractive. Recently, the selective depolymerisation of isolated lignins to aromatic monomers by targeting cleavage of the β-O-4 linkages has been demonstrated. For example, in the applicant's own international (PCT) patent application number WO 2016/027091.

The heterogeneous nature of lignin means that the ratio of monomers and structural units depends highly on the plant source and the extraction process. However the major structural unit is, in almost all lignins, the β-O-4 (β-aryl ether) linkage with lower amounts of β-β (resinol), β-5 (phenylcourmaran), β-1 (1,2-diarylpropane), 5-5 (biphenyl) and 4-O-5 (diaryl ether) linkages. A schematic view of a lignin polymeric structure and illustration of the various types of linkage between aromatic moieties is provided in Scheme 1, below. Sinapyl alcohol derived and coniferyl alcohol derived units may be designated S and G respectively.

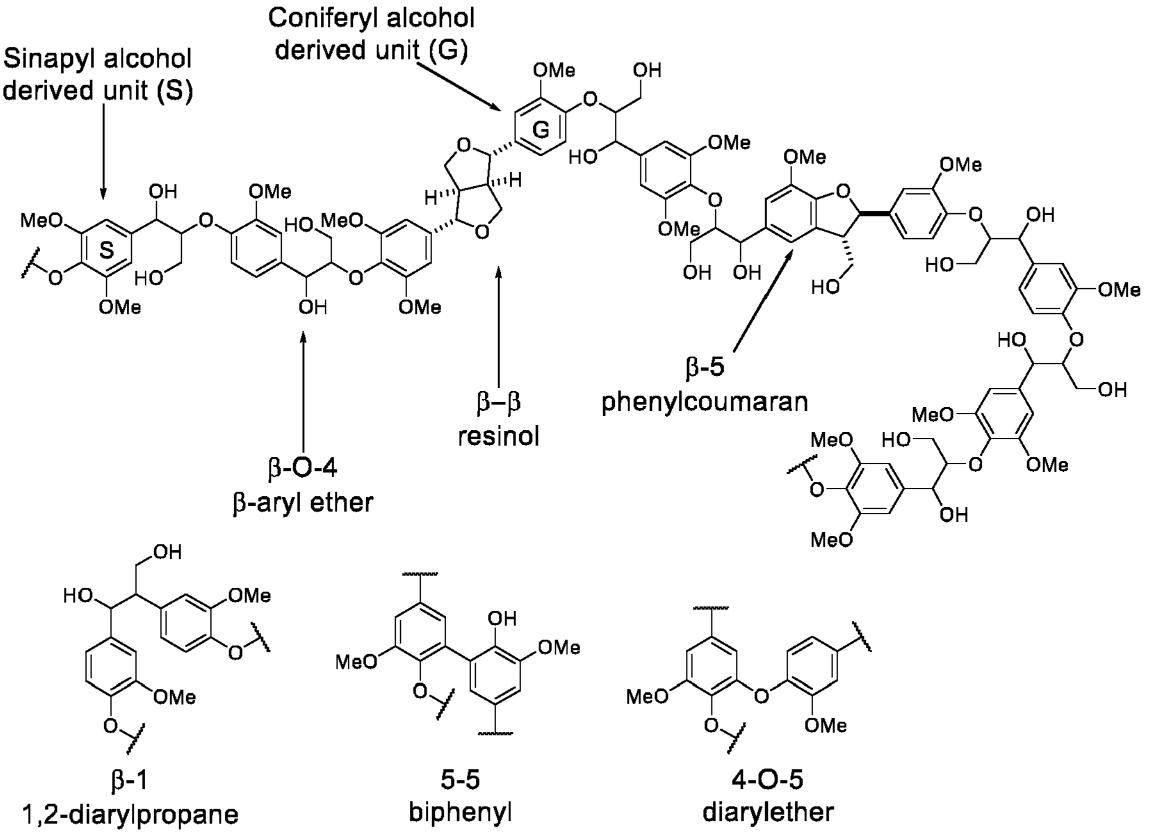


Scheme 1

Whilst this β-O-4 linkage is the most abundant one in native lignins, it is also the most labile and therefore not present in large quantities in most industrial lignins i.e. the lignin product available after removal of cellulose in typical industrial processes. Thus, if the selective depolymerisation of lignin to aromatic chemicals in good yields is to be realised, either new chemical methodologies must be developed to deal with highly condensed and recalcitrant industrial lignins, or new pre-treatment methods are needed which lead to less lignin degradation when processing lignocellulose.

F. E. Brauns et al. (Industrial and Engineering Chemistry, 37(1), 70-73 (1945)) describe a process for the preparation of lignin ethers and esters, based upon the reaction between the lead salt of the water-soluble alkali hardwood lignin (Meadol) - prepared by treating the aqueous lignin solution with either neutral or basic lead acetate - and alkyl halides and acid chlorides respectively. Additionally, the use of other metal derivatives of alkali hardwood lignin, including those of divalent mercury, divalent tin, and divalent copper, to prepare esters are also described.

L. F. del Rio et a/., (Appl Biochem Biotechnol, 161, 1-21 (2010) describe the effect of varying the organosolv pre-treatment chemicals magnesium chloride, sulfuric acid, sulfur dioxide and sodium hydroxide, in a mixture containing water and ethanol or butanol, on the physicochemical properties and cellulolytic hydrolysis of mountain pine beetle-killed lodgepole pine.

There is a need for improved processing of lignocellulose and lignocellulosic feedstocks to make good use of the options for processing the lignin content.

**Description of the Invention**

According to a first aspect the present invention provides a method of processing a lignocellulosic feedstock, the method comprising:

heating the lignocellulosic feedstock in a solvent mixture comprising an acid and at least 80% by volume of n-butanol to produce a reaction mixture including a butylated lignin.

The composition of solvent mixtures used for the methods of processing a lignocellulosic feedstock described herein does not include the presence of water, or other components that are present in the lignocellulosic feedstock itself. A dried cellulosic feedstock such as a sawdust may have from 5% to 20% water content. An undried lignocellulosic feed stock may have higher water content.

The production of a butylated lignin by the methods described herein has been found to produce a reaction

mixture from which good quality lignin, cellulose and hemicellulose products may be readily obtained as described further hereafter. With some feedstocks, especially woody feedstocks, the method has been found to provide improved results in comparison with more conventional organosolv processes that typically make use of ethanol. Non-woody feedstocks such as grass derived feedstocks can also be processed successfully (for example rice husks). As n-butanol is a product obtainable from biomass sources, as an alternative to ethanol, the use of n-butanol in processing a lignocellulosic feedstock is convenient. A biomass processing facility may include production of n-butanol from fermentation processes of products derived from the lignocellulosic feedstock.

The heating of the lignocellulosic feedstock may be in a mixture comprising an aqueous acid and at least 80% by volume, or even at least 90% by volume of n-butanol. An aqueous acid is convenient in use. However the acid can be supplied without water in n-butanol, or an n-butanol mixture with another solvent. For example as hydrogen chloride dissolved in n-butanol.

The acid may comprise any strong acid or mixtures thereof. Examples of strong acids may be selected from the group consisting of hydrochloric acid (HCl), hydroiodic acid (HI), hydrobromic acid (HBr), perchloric acid ($HClO_4$), nitric acid ($HNO_3$), sulfuric acid ($H_2SO_4$) and mixtures thereof.

Where an aqueous acid is employed, the aqueous acid may be a dilute aqueous acid, for example at a strength of 2M to 5M, before admixture to the butanol. Hydrochloric acid from 2M to 5M, for example 4M may be employed successfully.

The concentration of acid in the solvent mixture comprising at least 80% by volume of n-butanol may be from 0.05M to 3M or more, or even from 0,1M to 1M.

The ratio of n-butanol to aqueous acid solution may be of the order of at least 80:20 by volume, or even 90:10 by volume (v/v). Higher water content may lead to undesirable phase separations and/or reduce the butylation of the butylated lignin. Higher butanol content may be employed if desired. For example 95:5 by volume (v/v).

Conveniently the lignocellulosic feedstock is heated in the presence of a mixture comprising only the n-butanol an acid, and water. Conveniently this mixture is prepared by mixing an aqueous acid with n-butanol. Such mixtures are amenable to recycling. However, other components, such as other solvents may be present.

The lignocellulosic feedstock may be of any type. The methods described herein have been found applicable to woody lignocellulose sources such as woods, both hardwoods and softwoods. For example beech wood or Douglas fir woods and walnut shell. Such woody substrates are generally regarded as more difficult to process than softer materials such as grasses, for example *Miscanthus giganteus* or other grasses. However herbaceous substrates are also suitable. The methods described herein are generally applicable.

Typically the lignocellulosic feedstock is a dried feedstock. Typically the lignocellulosic feedstock is provided in relatively small particles such sawdust or as a ground product (e.g. ground walnut shell). Larger particles such as wood chippings may be employed, but may increase the processing time.

The ratio of the weight of lignocellulosic feedstock to the volume of the mixture comprising an acid and n-butanol may be of the order of from 1:5 to 1:10 (kg : litres).

Heating in the mixture of acid and n-butanol may conveniently be carried out at reflux (boiling of the liquids in the mixture), typically at ambient (atmospheric) pressure. However heating may be at lower temperature; or even at higher temperature, under elevated pressure.

Heating is continued until the products are separable and processable. This may depend on the source of the lignocellulosic feedstock and other variables such as particle size. When heating under reflux a reaction time of 3 to 10 hours, for example 4 to 8 hours has been found to give a satisfactory product mixture for further processing of woody feedstocks provided as a sawdust or ground product. In general the processing time may be selected to provide a cellulose product of good quality, especially of a quality amenable to enzymatic hydrolysis. A suitable processing time is readily determined by experiment.

The method provides a reaction mixture including a butylated lignin. The n-butanol replaces benzylic hydroxyl functional groups on the native lignin, especially in the the β-O-4 units, in the presence of an acid, to form butyl ether functional groups. The hydroxyl functional groups at β-O-4 linkages are converted to the corresponding butyl ethers. The reaction is illustrated schematically in Scheme 2 (below) for a lignin 1.

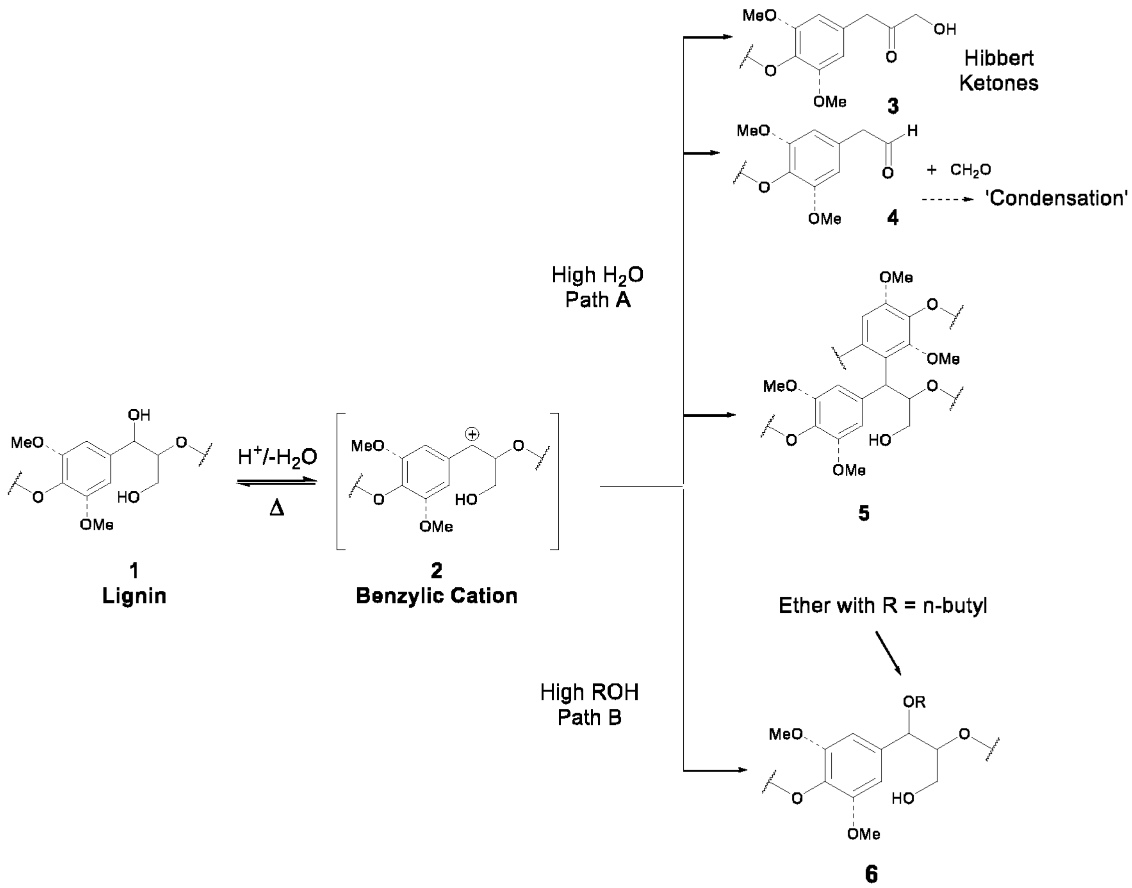


Scheme 2

Scheme 2 illustrates the reaction of a lignin 1, illustrated as a fragment including a β-O-4 linkage. Reaction is shown following a path A where there is a relatively high concentration of water present and alternatively along a path B where there is a relatively high alcohol (ROH) content in the reaction mixture. Where using the methods of the present invention path B is relatively favoured and the n-butanol employed as the alcohol (ROH) forms products with ether linkages as illustrated by lignin 6. Lignin 6 shows the substitution of the n-butyl group at the α (alpha) position on the β-O-4 linkage illustrated.

For satisfactory further processing, the conversion to butyl ethers of the benzylic hydroxyl functional groups (of the β-O-4 linkages) on the lignin should be at least 85%, preferably at least 90% as determined by NMR analysis of the lignin.

Analysis may be carried out by $^{1}H$-$^{13}C$-HSQC NMR.

The volume integrals of the benzylic (alpha, α) $^{1}H$-$^{13}C$ correlations for both the unsubstituted β-O-4 linkages and the β-O-4 etherified linkages (β-O-4-OR where R is n-Bu) may be compared to the sum of the volume integrals of the $S_{2/6}$, $G_2$ and $H_{2/6}$ positions on the lignin aromatic components (adjusted for the number of protons) to give the number of linkages of each type of β-O-4 linkage per 100 $C_9$ units in the lignin. (The lignin aromatic components are designated S, G and H in accordance with the standard nomenclature employed in lignin chemistry.)

Analysis may be conveniently carried out on an isolated lignin. An isolated lignin may be prepared for example by filtering the reaction mixture to remove pulp and concentrating the filtrate. The concentrate (residue) may be mixed with a water miscible solvent such as acetone and then added to water, typically slowly with stirring, to precipitate a butylated lignin product. The product may then be dried before dissolution in a suitable solvent for the NMR analysis.

The methods of the invention provide a modified lignin including the high conversion of hydroxyls to n-butyl ethers discussed above. The reaction mixture including a butylated lignin may be readily processed.

Thus according to a second aspect the present invention provides a reaction mixture comprising a butylated lignin obtainable from or obtained from a method according to the first aspect of the invention.

The reaction mixture following the heating step may be filtered to remove undissolved material. This may be done after cooling the reaction mixture, for example to ambient temperature, say from 10 to 30°C.

The undissolved material, the pulp, comprises cellulose. The pulp from the methods described herein has been found to be of good quality, with low levels of lignin or hemicellulose or modified lignins or hemicelluloses. This high

quality has been demonstrated in samples prepared by filtering the solids from a reaction mixture, (cooled to ambient temperature), washing the filtered solids and then drying. The washed dried pulp was subjected to semi quantitative NMR spectroscopic analysis. Very low levels of lignin and hemicelluloses were observed in the pulp. For example pulps may be obtained with reductions of more than 80% or even 90% for lignin, when compared with the original feedstock. Similarly reductions in xylan derived components (hemicelluloses) of more than 80% may be observed.

The pulp was subjected to enzymatic hydrolysis with a cellulose enzyme (a cellulase) as described in more detail hereafter. Good yields of reducing sugars can be produced, for example more than 80g reducing sugar per 100g of pulp or even higher. These results illustrate that the methods described herein can provide pulps that are highly digestible and therefore of potential use in biorefineries where the released monomeric sugars could be subjected to fermentation to bioethanol or butanol. Alternatively the sugars may find use as starting materials for chemical synthesis.

After filtration to remove undissolved material a butylated lignin may be obtained from the liquor (filtrate) remaining. Thus, according to a third aspect, the invention provides a butylated lignin product as defined in claim 17. Processing may include concentration of the liquor, which may be carried out a reduced pressure. After concentration the residue may be mixed with a water miscible solvent or water miscible solvent/water mixture. Solvents such as acetone, or acetone/water mixtures can serve. The resulting mixture, typically substantially in solution is then added to water, typically slowly with stirring, to precipitate a butylated lignin product. Where acetone/water mixtures are used to take up the residue after concentration an acetone: $H_2O$ ratio of from 8:2 to 9.5:1, advantageously 9:1 (v/v), may be employed

Where acetone and water is used in the precipitation of the butylated lignin product the addition of a small quantity of a salt has been found to aid precipitation and/or flocculation of the butylated lignin. Sodium sulfate may be employed, conveniently as an aqueous solution, typically a concentrated aqueous solution at or near saturation.

After filtration the lignin product may be washed and dried. Filtration may be by any suitable technique, including centrifugation. Centrifugation can be convenient where the lignin precipitate is in the form of fine particulates. Filtered lignin can be, for example washed with water and dried under reduced pressure. Drying may be further aided by the presence of a drying agent such as anhydrous calcium chloride.

The lignin product has a high proportion of n-butyl ether groups as discussed above.

The butylated lignin also has a high proportion of β-O-4 linkages (both butylated and not butylated). This is in contrast to typical lignins prepared by other methods where the β-O-4 linkages originally present in the native lignin tend to be degraded. Thus the butylated lignin in accordance with the third aspect of the invention may comprise at least 20 β-O-4 linkages per 100 Cg units as determined by $^{1}H$-$^{13}C$-HSQC NMR. Typically there may be from 30 to 60 or even more β-O-4 linkages per 100 $C_9$ units. The method may be as described above for the determination of the % of butylated linkages as it includes determination of the number of both butylated and not butylated linkages.

The butylated lignin can therefore contain at least 20 (or even from 30 to 60, or more) β-O-4 linkages per 100 Cg units and at least 85% of them are butylated.

The butylated lignin has been found to be readily processable to further products. For example the butyl groups may be readily replaced. Replacement of the butyl groups with hydroxyl groups may be effected by mild treatment with acid. For example aqueous hydrochloric acid. An organic solvent may be employed with the aqueous acid. For example a dioxane/water mixture containing hydrochloric acid. Such treatments can provide native like lignins that can be further processed by known methods, for example to provide aromatic small molecules for use in organic synthesis. Methods employed to provide small molecules may include the methods described in the applicant's international (PCT) patent application WO2016/027091.

Alternatively the butylated lignin may be converted directly to monomeric aromatic compounds. For example by a triflic acid or $Bi(OTf)_3$ mediated lignin depolymerisation methods described in more detail hereafter. Alternative agents such as methane sulfonic acid (MsOH) or p-toluene sulfonic acid (TsOH) may be employed.

Thus according to the third aspect the present invention provides a butylated lignin obtainable from or obtained from the methods of processing a lignocellulosic feedstock described herein.

In the butylated lignin of the invention, at least 85% of the β-O-4 linkages may include n-butyl ether groups as determined by 2D HSQC NMR.

After precipitation of lignin the remaining filtrate contains hemicelluloses. A hemicellulose product may be obtained, for example by concentration of the filtrate after filtering off the lignin product. Concentration of the filtrate may be by distillation for example. Concentration of the filtrate may be carried out under reduced pressure. The concentration of the filtrate may produce a hemicellulose product as a viscous oil that can have residual quantities of solvent (water or organic solvent) removed by further heating under reduced pressure, if desired.

The precipitation of the butylated lignin is generally achieved by addition of the lignin/ hemicelluloses mixture, in a solvent such as acetone or aqueous acetone, to water. The concentration of the aqueous hemicelluloses containing filtrate can therefore be relatively expensive in terms of energy cost, if a large volume of water is to be removed. Therefore it may be desirable to extract the hemicelluloses from the aqueous hemicelluloses containing filtrate by using a suitable organic solvent such as ethyl acetate, dichloromethane, 1-butanol or 2Me-THF, for example. The organic solvent extract(s) can be concentrated to provide the hemicelluloses with lower energy cost.

The hemicellulose product obtained contains butylated products. For example in the case of beech wood and walnut shell the hemicellulose product was shown by $^{13}C$ NMR to comprise mostly butyl-xylosides, whilst the hemicellulose product from Douglas fir contains butyl-mannosides as well as butyl-xylosides. These compounds were identified by comparison to authentic samples and correspond well to the known compositions of the hemicelluloses in these substrates. Such compounds are potentially valuable biorefinery products as they may have applications in the synthesis of bio-renewable surfactants and wetting agents.

Thus the methods of the invention can provide convenient separation of the principle components of lignocellulosic feedstock in the form of a pulp product ( a cellulose), a butylated lignin and a hemicellulose product. The products may be processed for use as valuable chemicals.

According to fourth and fifth aspects, there is provided a cellulose product as defined in claim 21 and a butylated hemicellulose product as defined in claim 22.

## Brief Description of the Drawings

Figures 1a and 1b illustrate results from NMR experiments showing beech wood and pulp obtained from beech wood;
Figure 2 shows graphically, results from experiments in enzymatic hydrolysis of beech pulp;
Figure 3 shows graphically, results from experiments to depolymerise lignin derivatives;
and
Figures 4a and 4b show a $^{1}H$-$^{13}C$-HSQC NMR analysis of a butylated lignin obtained from beech wood.

## Description of Some Preferred Embodiments and Experimental Results

Pre- treatment of Lignocellulosic Biomass to Provide Pulp, Lignin and Hemicellulose Products

Lignocellulosic biomass may be treated with an acidic medium as a pre-treatment. The objective is to dissolve lignin and hemicelluloses, to allow isolation of a pulp comprising mostly cellulose, for further processing. Lignin and hemicellulose products may also be obtained.

Previous studies by Bauer *et al.* have demonstrated that 95% ethanol containing 0.2 M HCl at reflux could extract up to 50% of the initial lignin in *Miscanthus gigantheus* biomass, with little xylan or glucan removal. (Ref 1)

As delignification is known to improve the susceptibility of cellulosic pulp to enzymatic hydrolysis, the pre-treatment of a range of lignocellulosic materials under similar conditions was investigated.

Beech (hardwood), Douglas fir (softwood) and walnut shell (endocarp) substrates were examined as being complementary to the previously studied herbaceous *Miscanthus giganteus.* These woody biomass sources are potentially important biorefinery feedstocks which possess a high energy density, do not compete for agricultural land and can be harvested year round.

*Materials*

The lignocellulosic feedstocks used throughout were obtained from commercial suppliers: beech and Douglas fir sawdusts were obtained from Hot Smoked (Useful Stuff Ltd), UK and the ground walnut shell was a kind donation from A. & E. Connock, UK. Commercially available rice husks were obtained from a brewing supplies company. All materials were used as received.

*Lignocellulosic Feedstock Processing - Beech Sawdust, Douglas Fir Sawdust, and Ground Walnut Shell* - as *Woody Substrate Examples*

Biomass samples were weighed into a round bottom flask followed by the addition of alcoholic solvent and aqueous 4 M HCl. The ratio of alcohol to aqueous acid was fixed at 95:5 and the biomass loading was kept constant at 1 g per 10 mL of solvent. The samples were then heated at reflux with stirring for 6 hours under an ambient atmosphere for both ethanol and n-butanol treatments. The ethanol treatments (including ethanol/HCl treatment in a closed vessel at 110°C), which are also shown are not in accordance with the invention. The samples were then allowed to cool and filtered. The solid residue (pulp) was washed with ethanol (10 mL/g), air dried and then further dried under vacuum at 70 °C for 14 hours. The pulp was then analysed as further described below.

The separated liquor was then concentrated *in vacuo,* taken up in acetone (ca. 1.5 ml/g of biomass used, 1 vol) and precipitated by dropwise addition to rapidly stirring water (20 vols).

The ethanol lignins formed easily filterable precipitates whilst n-butanol lignins benefited from the addition of a small volume of sat. aqueous $Na_2SO_4$ to flocculate the lignins to an easily filterable form. The crude lignins were then collected by filtration, washed with water and then dried under vacuum over anhydrous $CaCl_2$ for 16 hours. The lignin products were analysed as discussed below.

A hemicellulose fraction was isolated by concentration of the water fraction following precipitation of the lignin product. The resulting viscous oil was then dried in a vacuum oven at 70 °C for 24 hours. The hemicellulose products were analysed as discussed below.

*Lignocellulosic Feedstock Processing - Rice Husk - as Grassy Substrate Example*

The process generally follows that used for the woody feed stocks. To unextracted biomass (commercially available rice husks) was added *n*-butanol: 0.2 M (final concentration) HCl (95:5, 10 mL/g). The mixture was heated at a gentle reflux (ca. 100 °C) for 6 h and filtered when cooled. The residual pulp was washed with a solution of acetone:$H_2O$ (9:1 v/v), typically employing from 10 to 100mL solvent per gram of pulp, and the combined filtrates were concentrated *in vacuo* to yield a gum-like residue. The residue was dissolved in the minimum amount of acetone: $H_2O$ (9:1, 5 mL per gram of residue) and added dropwise to $H_2O$ (50 mL per gram of residue) to precipitate lignin. This precipitation therefore uses a lower solvent to water ratio (1:10 of the acetone/water (dissolving solvent) to water (precipitating solvent) rather than 1:20 as employed in the experiments with woody substrates.

The crude precipitate was collected by filtration and dried in a vacuum oven at 50 °C for 16 h. The dried precipitate was dissolved in acetone: MeOH (9:1, 5 mL/g) and added dropwise to petroleum ether (50 mL/g). The precipitate was collected by filtration and dried in a vacuum oven at 50 °C for 16 h to give a brown powder.

When the process was scaled from 4g rice husk to 400g and 4kg scales, the work up procedures were modified to facilitate recovery of hemicelluloses and provide easier recovery of the butylated lignin product. Precipitated lignin was removed by centrifugation. The aqueous filtrate was then added to a 0.5 v/v quantity of ethyl acetate and the solvents separated after mixing and allowing the layers to settle.

A high proportion of the modified hemicellulose sugars (-50%) were removed in the ethyl acetate layer. If desired, the remaining hemicellulose sugars in the aqueous filtrate layer can be recovered by further extraction procedures and/or concentration. Concentration can be *in vacuo* or by blowing air or other gas through the mixture.

*Results*

Results for the four feedstocks examined are summarised in Table 1, below.

**Table 1** Results of high alcohol biomass pre-treatments. Conditions: 10 mL/g loading, 0.2 M HCl, 95:5 ROH/$H_2O$, 6 hours. *average of 3 repeat extractions

| Entry | Biomass | Cellulose: Hemicellulose: Lignin (wt%) | Solvent | Temp (°C) | Pulp Yield (wt%) | Lignin Yield (wt%) |
|---|---|---|---|---|---|---|
| 1 | Beech | 39:20:25(Ref 2) | ethanol | reflux | 85 | 4.1 |
| 2* | | | butanol | reflux | 46 | 21 |
| 3 | | | ethanol | 110 | 49 | 10.6 |
| 4 | Walnut | 21:19:33(Ref 2) | ethanol | reflux | 86 | 6.1 |
| 5* | | | butanol | reflux | 35 | 32 |
| 6 | | | ethanol | 110 | 46 | 19 |
| 7 | Douglas Fir | 50:18:28(Ref 2) | ethanol | reflux | 89 | 5.5 |
| 8* | | | butanol | reflux | 57 | 17 |
| 9 | | | ethanol | 110 | 79 | 5.5 |
| 10 | Rice Husk | 59 : 27 : 14 | butanol | reflux | 58 | 14.5 |
| Solvent mixtures were made by mixing 95% of the alcohol (ethanol or n- butanol) with 5% 4M aqueous HCl to give a mixture with a 0,2M HCl content. | | | | | | |

Treatment using 95% ethanol containing 0.2 M HCl at reflux for 6 hours with these substrates proved disappointing (Table 1, Entries 1, 4 and 7). Isolated yields of lignin were low in all cases accounting for only approximately 16-20% of the Klason lignin and pulp yields were correspondingly high. The Klason lignin content of a biomass is a pulp industry standard method for determining lignin involving a sulfuric acid treatment where the insoluble residue after the

process is complete is defined as the Klason lignin content.

These results are consistent with the greater recalcitrance of woody biomass compared to herbaceous materials and highlights the more challenging nature of such feedstocks.

When the ethanol was replaced by n-butanol the isolated yields of lignin improved dramatically and unexpectedly whilst the corresponding pulp yields fell significantly (Table 1, Entries 2, 5, 8). Reaction was carried out with a mixture of 95% n-butanol and 5% 4M aqueous HCl by volume. (i.e. a 0.2M HCl strength in the mixture), reflux for 6 hours.

The isolated yield of lignin from beech and walnut shell was significantly higher than from Douglas fir based on the previously reported Klason lignin content of these feedstocks, accounting for 84, 97 and 61 wt% of the original lignin respectively. This likely reflects the known greater recalcitrance of softwood feedstocks.

In addition the lower pulp yields obtained in these pre-treatments indicate that efficient solubilisation of hemicelluloses occurs during the process. Although similar pulp yields and intermediate lignin yields could be obtained using ethanol at elevated temperatures in a sealed system (Table 1, Entries 3, 6 and 9), this introduces the added complexity of having to run the process under elevated pressures.

In proposed structural models of woody biomass the hemicelluloses and lignin form an intimate matrix (lignin-carbohydrate complex) around the cellulose fibres. Without wishing to be bound by theory, it seems likely that the efficient solubilisation of the hemicelluloses is an important step during the pre-treatment process to allow for high levels of delignification. Without it, solvent access to lignified tissues may be blocked by insoluble carbohydrates preventing lignin solubilisation.

Significant defibration of the biomass samples was only observed after either n-butanol or high temperature ethanol pre-treatments. This is consistent with the loss in structural integrity of the wood fibres after removal of both the lignin and hemicelluloses which leads to mechanical deconstruction of the wood particles under the stirring condition of the extractions.

Pulp Characterisation

In order to better understand the compositional changes occurring during the pulping process a 2D HSQC NMR study was undertaken. For this analysis beech wood was selected as it has previously been identified as a potential European biorefinery feedstock and has been used in a number of other pre-treatment studies.

An AcBr/AcOH reagent mixture was used to solubilise and derivitize all the cell wall components prior to NMR analysis without the need for extensive planetary ball milling. This mixture is well known to solubilise lignocellulosic materials and is usually used for the determination of lignin content or DFRC analysis (Derivatization Followed by Reductive Cleavage).

For this analysis beech wood was selected as a model substrate as it has previously been identified as a potential European biorefinery feedstock and has been used in a number of other pre-treatment studies. The results of this study are presented visually in Figures 1a, 1b. Figure 1a shows $^{1}H$-$^{13}C$-HSQC NMR analysis of A) derivatised whole beech cell walls and B) derivatised pulp obtained from a butanol based treatment of beech wood. Figure 1b shows the structural units identified by their $^{1}H$-$^{13}C$-HSQC NMR signals in figure 1a. Thus for example $LigS_{2/6}$ refers to the C-H signals from LigS positions 2 and 6.

As can be seen in B) of figure 1a the lignin signals (Lig) are largely absent in the derivatised pulp product. The positions where essentially absent lignin signals would appear are marked by dashed ellipses. Note that the signals $LigS_{2/6}$ shown in B) are magnified four times as indicated on the figure by the magnifying glass symbol and 'x4'.

A comparison of the 2D HSQC NMR spectra for the whole beech wood against spectra for the pulp obtained from the n-butanol treatment procedure of Table 1 above was made. As indicated in Figure 1 a semi-quantitative analysis indicates reductions of 97% for lignin and 88% for xylan derived components relative to the cellulose derivatives, when comparing the pulp to the whole wood. This is consistent with the observed pulp yields.

The quality of the pulp obtained was further examined by enzymatic hydrolysis.

Enzymatic hydrolysis was carried out at 50 °C as follows: To a glass vial was added substrate (250 mg), pH 5.5 acetate buffer (5 mL, 50 mM containing 0.02 wt% $NaN_3$) and CTec 2 cellulase preparation (22 FPU). Shaken hydrolyses were conducted using a Buchi Syncore parallel synthesis reactor set at 300 rpm. Stirred hydrolyses were performed using a magnetic stirrer/hotplate. 100 $\mu$L samples were taken at 24, 48, 72 and 120 hours and the amount of reducing sugars released was determined using the DNS method relative to a glucose calibration curve.

The enzymatic hydrolysis of beech pulp obtained by the n-butanol treatment is shown graphically in Figure 2.

At a 5 wt% consistency and an enzyme loading of 22 FPU (filter paper units) per gram of Cellic® CTec2 (Novozyme, Denmark) the crude pulp (labelled SH-CP) gave a reducing sugar yield of 77 g per 100 g after 120 hours. The rate of hydrolysis was significantly improved by pre-milling the pulp (labelled SH-G) to increase the enzyme accessible surface area giving a reducing sugar yield of 56 g per 100 g after 24 hours compared to 40 g per 100 g for the crude pulp, although final sugar yields only marginally improved to 82 g per 100 g. Combining pre-milling with additional mechanical stirring during the hydrolysis (labelled ST-G) further improved the rate (82 g per 100 g after 24 hours) and

final sugar yields (94 g per 100 g) compared to standard shaking. The beneficial effect of stirring likely originates from further mechanical defibration of the pulp during the hydrolysis. This data clearly shows that n-butanol derived pulps are highly digestible and therefore potentially relevant for biorefineries where the released monomeric sugars could be subjected to fermentation to bioethanol/butanol or used as starting materials for chemical synthesis.

Lignin Characterisation

The lignins obtained were characterised by gel permeation chromatography (GPC) and $^1H$-$^{13}C$ HSQC NMR which gives detailed structural and compositional information. The results of these analyses are summarised in Table 2 below. For comparison purposes a beech technical ethanosolv lignin prepared using current ethanol organosolv pretreatment conditions (Ref 3) was also included (Table 2, Entry 1).

**Table 2** 2D HSQC NMR and GPC analysis of lignins. *average of 3 repeat extractions.

| | | | Aromatics (%) | | | Linkages (per 100 $C_9$ units) | | | | | | GPC (Da) | | |
|---|---|---|---|---|---|---|---|---|---|---|---|---|---|---|
| | Entry | Lignin | S | G | H | β-O-4 | β-O-4-OR | β-β | β-5 | %OR | Σ β-aryl ether | Mn | Mw | PD |
| | 1 | Technical | 76 | 24 | 0 | 7 | 10 | 3 | 4 | 57 | 17 | 976 | 2069 | 2.1 |
| Beech | 2 | EtOH | 61 | 39 | 0 | 22 | 41 | 7 | 4 | 65 | 63 | 1086 | 2767 | 2.5 |
| Beech | 3* | *n*-BuOH | 81 | 19 | 0 | 3 | 49 | 4 | 1 | 95 | 51 | 975 | 2483 | 2.5 |
| Beech | 4 | EtOH (110 °C) | 81 | 19 | 0 | 2 | 41 | 5 | 1 | 96 | 43 | 927 | 1846 | 2.0 |
| Walnut Shell | 5 | EtOH | 57 | 33 | 10 | 17 | 41 | 5 | 8 | 71 | 58 | 880 | 2536 | 2.9 |
| Walnut Shell | 6* | *n*-BuOH | 74 | 25 | 1 | 3 | 49 | 3 | 2 | 97 | 52 | 1018 | 2717 | 2.7 |
| Walnut Shell | 7 | EtOH (110 °C) | 74 | 24 | 2 | 2 | 49 | 5 | 3 | 95 | 51 | 959 | 2060 | 2.1 |
| Douglas Fir | 8 | EtOH | 0 | 100 | 0 | 9 | 43 | 2 | 13 | 84 | 52 | 886 | 2200 | 2.5 |
| Douglas Fir | 9* | *n*-BuOH | 0 | 100 | 0 | 0 | 51 | 2 | 5 | 100 | 51 | 861 | 2628 | 2.5 |
| Douglas Fir | 10 | EtOH (110 °C) | 0 | 100 | 0 | 2 | 49 | 2 | 6 | 96 | 51 | 918 | 2341 | 2.6 |
| Rice husk | 11 | *n*-BuOH | 17 | 56 | 27 | 3 | 45 | 1 | 3 | 94 | 48 | 1865 | 3221 | 1.7 |

In the table the aromatic groups of the lignins are designated S, G and H as usual: denoting aromatics derived from sinapyl alcohol, coniferyl alcohol, and p-coumaryl alcohol respectively. All the lignins isolated in this study were

found to have undergone structural modification. Specifically, the α-OH group in the most abundant β-O-4 linkage became substituted by the alcohol solvent (β-O-4-OR where R is Et or n-Bu). The % OR figure gives a measure of the extent of etherification of the β-O-4 linkages in the lignin. It is calculated as the % of the total number of β-O-4 linkages per 100 Cg units that are etherified i.e. 100×β-O-4-OR/[β-O-4 + β-O-4-OR]).

The extent of this substitution depends both on the chemical composition of the lignin, with G units being more reactive than S (Table 2, Entries 2 and 6 vs 9), and on the severity of the pulping conditions, with higher temperatures resulting in more extensive substitution (Table 2, Entry 2 vs 3). This modification is clearly observable in the 2D HSQC NMR spectra obtained for these lignins. See Figure 4 which shows a butylated beech wood derived lignin and is discussed further below under the heading "Analysis of Lignins"

Other than extensive α-OH substitution, the obtained lignins are remarkably free from further degradation, particularly compared to the technical lignin (Table 2, Entry 1 ). A semi-quantitative assessment of the amount of β-aryl ethers revealed that in all cases large amounts of this type of linkage are retained (43-63 per 100 $C_9$ units compared to 17 for the technical lignin). (The terminology "per 100 Cg units" refers to the $C_9$ units (nine carbon groups - 6 aromatic and 3 side chain) that make up a lignin.)

As most selective lignin depolymerisation processes target cleavage of the β-aryl ether bonds this is a good measure of the potential of these lignins to undergo selective depolymerisation to aromatic chemicals. It was also observed that the S:G ratio increases under more severe pre-treatment conditions which also correlates with a decrease in β-5 linkages whilst β-β linkages appear to remain quite constant.

GPC analysis revealed that all the lignins had relatively similar apparent molecular weights and quite similar polydispersities. However, it should be noted that such analysis does not adjust for differences in the degree and nature of α-substitution. . In the case of rice husks the lignin has a higher molecular weight, although the polydispersity is lower.

Lignin Valorisation

*De-etherification*

Although the relatively high β-aryl ether content of the produced lignin products make them attractive targets for depolymerisation to aromatic chemicals, most current methods for this have been developed using 'native like' lignins, i.e. with α-OH groups in the β-O-4 linkages.

The α-etherification of lignins treated with alcohols is reversible, enabling the possibility of transforming the modified lignins into native-like lignins. Treating ether modified lignins under mild acidic aqueous organosolv type conditions (0.1 M HCl in 2:1 dioxane/water at 100 °C) can reverse α-etherification to give native-like lignins.

The ether modified lignin (200 mg) was dissolved in 1,4-dioxane/water (2:1, 5 mL) containing 0.1 M HCl and heated in a sealed vial at 100 °C (oil bath temperature) for 4 hours for ethanol and 6 hours for *n*-butanol lignins. After this time the lignin was recovered by precipitation in water (40 mL), collected by filtration and allowed to air dry overnight. Mass recovery for ethanol lignins was 60-70 wt%, for *n*-butanol lignins 55-60 wt%.

This process was effective on ethanol and *n*-butanol lignins obtained from both Douglas fir and walnut shell. In these experiments this process worked best for ethanol over butanol and Douglas fir over walnut shell lignins reflecting the lower initial degree of α-etherification in ethanol lignins (Table 2) and the greater reactivity of G units compared to the S units. In all cases a decrease in total β-aryl ether content was observed indicating some acid mediated degradation occurs during this process.

*Direct Acidolysis to Monomers*

The use of a triflic acid mediated lignin depolymerisation method has been reported by Deuss *et al. (ref 4, 5).* Initially, using $Bi(OTf)_3$ as a convenient alternative to triflic acid, it was found that modified lignins were efficiently depolymerised to give the expected acetals in 1,4-dioxane in moderate to good yields without any need to pre-process the lignin. The reaction is illustrated in Scheme 3, below. Figure 3 shows the results graphically.

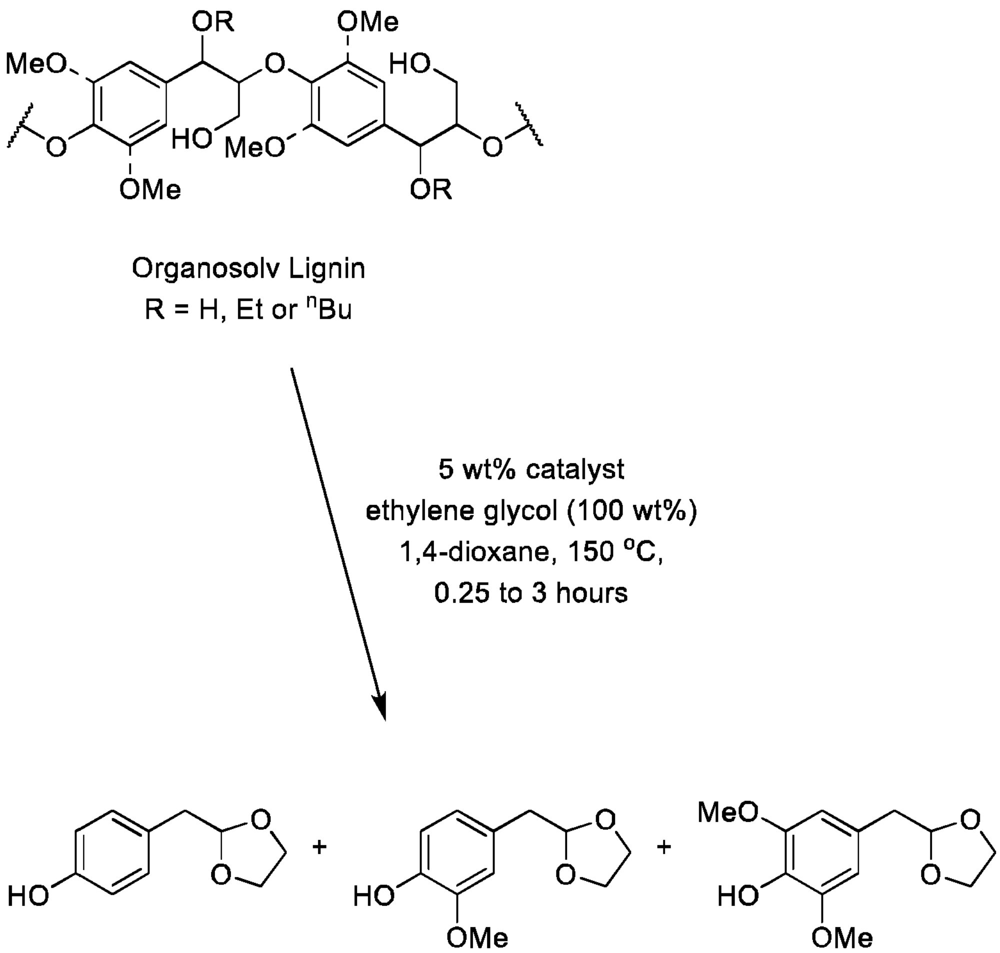


Organosolv Lignin

R = H, Et or $^{n}$Bu

P1 P2 P3

**Scheme 3** Acid-ethylene glycol mediated depolymerisation of □-etherified lignins to mono-aromatic chemicals. Catalyst = Bi(OTf)$_3$, MsOH or TsOH.

For GC analysis: the lignin (100 mg) was dissolved in 1,4-dioxane (1.5 mL) containing ethylene glycol (100 mg). Bismuth triflate (5 mg) and n-octadecane (20 μL, 0.25 M in 1,4-dioxane, 0.005 mmol) was then added and the mixture heated at 150 °C (oil bath temperature) for 15 minutes in a sealed tube. The reaction was then cooled and concentrated *in vacuo.* The oily residue was then extracted with hot (ca. 70 °C) toluene (4 × 3 mL) and passed through a small plug of $Na_2SO_4$ and then concentrated *in vacuo.* GC-FID analysis was performed on a solution of the concentrated samples in dichloromethane.

At a preparative scale: walnut ethanol etherified lignin (1.0 g) was dissolved in 1,4-dioxane (15 mL) containing ethylene glycol (1.0 g) and bismuth triflate (50 mg) was then added and the mixture heated at 150 °C (oil bath temperature) for 15 minutes in a sealed tube. The reaction was then cooled and concentrated *in vacuo.* The oily residue was then extracted with hot (ca. 70 °C) toluene (7 × 15 mL), dried with $Na_2SO_4$ and then concentrated *in vacuo.* The oily residue was then dry loaded using a small quantity of silica on to a 10 g silica gel column and eluted using a gradient of 0-50% EtOAc/petroleum ether over 50 column volumes.

The highest yields (as determined by GC analysis) of acetals were obtained for ethanol extracted lignins i.e. where R = Et in Scheme 2. With beech and walnut shell ethanol lignins gave 17 and 18 wt% yields of acetals respectively, whilst Douglas fir gave 11 wt%.

This result is consistent with 2D HSQC analysis which indicated beech and walnut shell lignins had slightly higher β-aryl ether contents than the Douglas fir lignin (Table 2, Entries 2, 5 and 8) and the fact that softwood lignins are known to have higher amounts of cross linking between aromatic units (i.e. 5-5 and 4-O-5 linkages). The *n*-butanol extracted lignins followed the same pattern, although overall yields were lower which probably results from a combination of lower β-aryl ether content and higher amounts of α-butoxylation (Table 2, Entries 3, 6, 9) which increases the molecular weight of the lignin.

Comparison of the beech butanol lignin and a technical beech ethanol lignin show that n-butanol lignin is approximately 4 times higher yielding, highlighting their potential value for the production of mono-aromatic chemicals. Additionally, $Bi(OTf)_3$ could be replaced with cheaper and safer MsOH or TsOH with only a small drop in yield (Figure 3).

The yields of both **P1** and **P2** were almost identical using these acids compared to $Bi(OTf)_3$ and the decrease in overall yield was the result of reduced **P3** production.

The improved solubility of *n*-butanol lignins may allow the use of alternative solvents in such a process. The use of 2-MeTHF as a reaction solvent was demonstrated. This is a greener alternative to 1,4-dioxane, However the acetal yields were found to be significantly lower in these initial experiments.

A scale up of this reaction to a 1 gram scale using $Bi(OTf)_3$ as a catalyst in 1,4-dioxane allowed isolation of a combined 12.3 wt% yield of **P1-3** acetals from walnut shell ethanol lignin after purification by column chromatography.

*Hemicellulose Fraction*

After isolation of the cellulose pulp and lignin a water soluble fraction is obtained containing most of the hemicelluloses. For the most promising *n*-butanol pre-treatments these water soluble fractions were analysed by $^{13}C$ NMR. This analysis revealed that they are, in the case of beechand walnut shell, composed almost exclusively of butyl-xylosides, whilst the Douglas fir extract contained butyl-mannosides as well as butyl-xylosides. These compounds were identified by comparison to authentic samples and correspond well to the known compositions of the native hemicelluloses in these substrates. Such butylated hemicellulose compounds are potentially valuable biorefinery products which may have applications in the synthesis of bio-renewable surfactants and wetting agents which can have properties similar or superior to petrochemical derived products.

<u>Analysis of lignins</u>

**NMR Spectroscopy**

For lignin NMR analysis 100-110 mg of the lignin concerned was dissolved 0.6 mL of $d_6$-acetone.

Wood and pulp analysis: The sample for analysis (125 mg - ground <0.5 mm) is added to AcOH/AcBr (4:1, 10 mL) and heated at 50 °C with sonication (Ultrawave Q-Series ultrasonic bath) until a clear solution is obtained (approx. 3 hour). This was best achieved using the sonicator but the same result can be achieved using conventional heating and stirring over a longer time. The sample is then concentrated *in vacuo* (caution HBr fumes) and further dried under a stream of air for 15 minutes. The sample is then dissolved in $d_6$-acetone (0.7 mL), centrifuged and then used for NMR analysis immediately. The samples cannot be stored for extended periods.

NMR analysis was performed on a Bruker Ascend 700 MHz or 500 MHz spectrometers equipped with CPP TCI and CPP BBO probes respectively following previously reported protocols (Ref 6).

In summary, the $^1H$-$^{13}C$-HSQC experiment was acquired using the standard Bruker pulse sequence 'hsqcetgpsp.3' (phase-sensitive gradient-edited-2D HSQC using adiabatic pulses for inversion and refocusing). Composite pulse sequence 'garp4' was used for broadband decoupling during acquisition. 2048 data points was acquired over 12 ppm spectral width (acquisition time 170 ms) in F2 dimension with 1 s interscan delay and the d4 delay was set to 1.8 ms (1/4J, J = 140 Hz). The number of scans is chosen to give a suitable signal-to-noise ratio - in this case 4 to 24 were used depending on the sample and instrumentation used for the analysis. The spectra were processed using squared cosinebell in both dimensions and LPfc linear prediction (32 coefficients) in F1.

Semi-quantitative analysis of the volume integrals for the lignin and carbohydrate linkages was performed using MestReNova 9.0 for lignins and TopSpin 3.1 (Windows) for cell walls.

Specifically for lignin the volume integrals of the benzylic (alpha, $\alpha$) $^1H$-$^{13}C$ correlations for both the unsubstituted $\beta$-O-4 linkages and the $\beta$-O-4 etherified linkages ($\beta$-O-4-OR where R is Et or n-Bu), were compared to the sum of the volume integrals of the $S_{2/6}$, $G_2$ and $H_{2/6}$ positions on the lignin aromatic components (adjusted for the number of protons) to give the number of linkages of each type of $\beta$-O-4 linkage per 100 $C_9$ units.

Figure 4a shows a $^1H$-$^{13}C$-HSQC NMR analysis of a butylated lignin obtained from Beech wood. The signals used for calculation of the % butylated $\beta$-O-4 linkages per 100 $C_9$ units are designated as i1and i2 for the S and G aromatic signals and i3 for the alpha C-H signal of the butylated $\beta$-O-4-OR groups. Figure 4b shows the nomenclature used for the signals of the various Cg structural units present in the sample The alpha C-H signal of the butylated $\beta$-O-4-OR groups are in structural unit **A**'.

The calculation of the number of unsubstituted $\beta$-O-4 linkages and substituted (butylated) linkages $\beta$-O-4-OR per 100 Cg units is based on the volume integrals I indicated by dashed boxes in the figure 4a.

$$\text{For } \beta\text{-O-4-OR per 100 } C_9 \text{ units} = 100 \times [\, i3 / \{(i1/2) + i2\}];$$

$$\text{For } \beta\text{-O-4 (unsubstituted) per 100 } C_9 \text{ units} = 100 \times [i4 / \{(i1/2) + i2\}]$$

Graphical figures were prepared using Abobe Illustrator from spectra exported from MestReNova/TopSpin in the pdf format.

**GPC Analysis**

GPC analysis was carried out on a Shimadzu HPLC/GPC system equipped with a CBM-20A communications bus, DGU-20A degassing unit, LC-20AD pump, SIL-20A auto sampler, CTO-20A column oven and SPD-20A UV-Vis dectector. Samples were analysed using a Phenogel 5μ 50A (300 × 7.8 mm) and Phenogel 5μ 500A (300 × 7.8 mm) columns connected in series and eluted with inhibitor free THF (1 mL/min) with a column oven temperature of 30 °C. Samples (10 mg) were dissolved in THF (1 mL) and filtered (0.45 μm PTFE syringe filter) before analysis. Analysis was performed using the GPC postrun data analysis module implemented in Shimadzu's LabSolutions software.

**References**

1. Bauer, S.; Sorek, H.; Mitchell, V. D.; Ibáñez, A. B.; Wemmer, D. E. J. Agric. Food Chem. 2012, 60, 8203.

2. Shuai, L.; Questell-Santiago, Y. M.; Luterbacher, J. S. Green Chem. 2016, 18, 937; Antal, M. J.; Allen, S. G.; Dai, X.; Shimizu, B.; Tam, M. S.; Grønli, M. Industrial & Engineering Chemistry Research 2000, 39, 4024; and Lee,J. Journal of Biotechnology 1997, 56, 1.

3. Huijgen, W. J. J.; Telysheva, G.; Arshanitsa, A.; Gosselink, R. J. A.; de Wild, P. J. Industrial Crops and Products 2014, 59, 85: and Wildschut, J.; Smit, A. T.; Reith, J. H.; Huijgen, W. J. J. Bioresour. Technol. 2013, 135, 58.

4. Deuss, P. J.; Scott, M.; Tran, F.; Westwood, N. J.; de Vries, J. G.; Barta, K. J. Am. Chem. Soc. 2015.

5. Lahive, C. W.; Deuss, P. J.; Lancefield, C. S.; Sun, Z.; Cordes, D. B.; Young, C. M.; Tran, F.; Slawin, A. M. Z.; de Vries, J. G.; Kamer, P. C. J.; Westwood, N. J.; Barta, K. J. Am. Chem. Soc. 2016.

6. Tran, F.; Lancefield, C. S.; Kamer, P. C. J.; Lebl, T.; Westwood, N. J. Green Chem. 2015, 17, 244.

**Claims**

**1.** A method of processing a lignocellulosic feedstock, the method comprising:
heating the lignocellulosic feedstock in in a solvent mixture comprising an acid and at least 80% by volume of n-butanol to produce a reaction mixture including a butylated lignin.

**2.** The method according to claim 1 wherein the solvent mixture comprises at least 80% by volume of n-butanol and an aqueous acid.

**3.** The method according to claim 1 or claim 2 wherein heating is continued until the conversion to butyl ethers of the benzylic hydroxyl functional groups of the β-O-4 linkages on the lignin is at least 85%, as determined by $^1H$-$^{13}C$-HSQC NMR analysis.

**4.** The method according to any preceding claim wherein the acid employed in the solvent mixture is selected from the group consisting of hydrochloric acid (HCl), hydroiodic acid (HI), hydrobromic acid (HBr), perchloric acid ($HClO_4$), nitric acid ($HNO_3$), sulfuric acid ($H_2SO_4$) and mixtures thereof.

**5.** The method according to any preceding claim wherein the concentration of acid in the solvent mixture is from 0.05M to 3M.

**6.** The method according to any preceding claim wherein the lignocellulosic feedstock is heated in a solvent mixture comprising only n-butanol, water and the acid.

7. The method according to any preceding claim wherein the lignocellulosic feedstock is biomass from trees.

8. The method according to any preceding claim wherein the lignocellulosic feedstock is dried to less than 20% moisture.

9. The method according to any preceding claim wherein the heating is carried out at reflux and at ambient pressure.

10. The method according to any preceding claim wherein after the heating step the reaction mixture is filtered to remove a solid cellulose product leaving a filtrate containing butylated lignin.

11. The method according to claim 10 wherein a butylated lignin product is obtained from the filtrate.

12. The method according to claim 11 wherein the butylated lignin product is obtained by concentrating the filtrate, mixing the residue with a water miscible solvent, and adding the resulting mixture to water, to precipitate the butylated lignin product.

13. The method according to claim 12 wherein acetone, or an acetone/water mixture is used as the water miscible solvent.

14. The method according to claim 13 wherein sodium sulfate is used to aid flocculation of the butylated lignin precipitate.

15. The method according to any one of claims 12 to 14 wherein a hemicellulose product is obtained from the filtrate remaining after removal of the precipitated butylated lignin product.

16. A reaction mixture comprising a butylated lignin obtainable from or obtained from a method according to any one of claims 1 to 10.

17. A butylated lignin product obtainable from or obtained from a method according to claim 11.

18. The butylated lignin product of claim 17, wherein at least 85% of the β-O-4 linkages include n-butyl ether groups as determined by $^{1}H$-$^{13}C$-HSQC NMR analysis.

19. The butylated lignin product of claim 18 wherein there are at least 20 β-O-4 linkages per 100 Cg units as determined by $^{1}H$-$^{13}C$-HSQC NMR.

20. The butylated lignin product of claim 17, wherein there are at least 20 β-O-4 linkages per 100 Cg units as determined by $^{1}H$-$^{13}C$-HSQC NMR.

21. A cellulose product obtainable from or obtained from a method according to claim 10.

22. A butylated hemicellulose product obtainable from or obtained from a method according to claim 15.

**Patentansprüche**

1. Verfahren zur Verarbeitung eines lignocellulosischen Ausgangsstoffs, wobei das Verfahren umfasst:
Erhitzen des lignocellulosischen Ausgangsstoffs in einem eine Säure und mindestens 80 Vol.-% n-Butanol umfassenden Lösungsmittelgemisch, um ein Reaktionsgemisch herzustellen, das ein butyliertes Lignin einschließt.

2. Verfahren nach Anspruch 1, wobei das Lösungsmittelgemisch mindestens 80 Vol.-% n-Butanol und eine wässrige Säure umfasst.

3. Verfahren nach Anspruch 1 oder Anspruch 2, wobei das Erhitzen fortgesetzt wird, bis die Umwandlung zu Butylethern der benzylischen hydroxylfunktionellen Gruppen der β-O-4-Verknüpfungen am Lignin mindestens 85% beträgt, gemäß Bestimmung durch $^{1}H$-$^{13}C$-HSQC-NMR-Analyse.

4. Verfahren nach einem der vorstehenden Ansprüche, wobei die im Lösungsmittelgemisch eingesetzte Säure aus der Gruppe ausgewählt ist, die aus Chlorwasserstoffsäure (HCl), Iodwasserstoffsäure (HI), Bromwasserstoffsäure (HBr), Perchlorsäure ($HClO_4$), Salpetersäure ($HNO_3$), Schwefelsäure ($H_2SO_4$) und Gemischen davon besteht.

5. Verfahren nach einem der vorstehenden Ansprüche, wobei die Konzentration von Säure im Lösungsmittelgemisch 0,05 M bis 3 M beträgt.

6. Verfahren nach einem der vorstehenden Ansprüche, wobei der lignocellulosische Ausgangsstoff in einem Lösungsmittelgemisch erhitzt wird, das nur n-Butanol, Wasser und die Säure umfasst.

7. Verfahren nach einem der vorstehenden Ansprüche, wobei der lignocellulosische Ausgangsstoff Biomasse von Bäumen ist.

8. Verfahren nach einem der vorstehenden Ansprüche, wobei der lignocellulosische Ausgangsstoff auf unter 20% Feuchtigkeit getrocknet wird.

9. Verfahren nach einem der vorstehenden Ansprüche, wobei das Erhitzen bei Rückfluss und bei Umgebungsdruck ausgeführt wird.

10. Verfahren nach einem der vorstehenden Ansprüche, wobei nach dem Erhitzungsschritt das Reaktionsgemisch filtriert wird, um ein festes Celluloseprodukt zu entfernen, wobei ein Filtrat zurückbleibt, das butyliertes Lignin enthält.

11. Verfahren nach Anspruch 10, wobei ein butyliertes Ligninprodukt aus dem Filtrat erhalten wird.

12. Verfahren nach Anspruch 11, wobei das butylierte Ligninprodukt erhalten wird durch Einengen des Filtrats, Mischen des Rückstands mit einem wassermischbaren Lösungsmittel, und Zugeben des daraus entstandenen Gemischs zu Wasser, um das butylierte Ligninprodukt zu präzipitieren.

13. Verfahren nach Anspruch 12, wobei Aceton, oder ein Aceton/Wasser-Gemisch, als das wassermischbare Lösungsmittel verwendet wird.

14. Verfahren nach Anspruch 13, wobei Natriumsulfat verwendet wird, um Flokkulation des butylierten Ligninpräzipitats zu unterstützen.

15. Verfahren nach einem der Ansprüche 12 bis 14, wobei ein Hemicelluloseprodukt aus dem Filtrat erhalten wird, das nach Entfernung des präzipitierten butylierten Ligninprodukts verbleibt.

16. Reaktionsgemisch, umfassend ein butyliertes Lignin, erhaltbar aus oder erhalten aus einem Verfahren nach einem der Ansprüche 1 bis 10.

17. Butyliertes Ligninprodukt, erhaltbar aus oder erhalten aus einem Verfahren nach Anspruch 11.

18. Butyliertes Ligninprodukt nach Anspruch 17, wobei mindestens 85% der β-O-4-Verknüpfungen n-Butylethergruppen einschließen, gemäß Bestimmung durch $^{1}H$-$^{13}C$-HSQC-NMR-Analyse.

19. Butyliertes Ligninprodukt nach Anspruch 18, wobei mindestens 20 β-O-4-Verknüpfungen pro 100 $C_9$-Einheiten vorhanden sind, gemäß Bestimmung durch $^{1}H$-$^{13}C$-HSQC-NMR

20. Butyliertes Ligninprodukt nach Anspruch 17, wobei mindestens 20 β-O-4-Verknüpfungen pro 100 $C_9$-Einheiten vorhanden sind, gemäß Bestimmung durch $^{1}H$-$^{13}C$-HSQC-NMR

21. Celluloseprodukt, erhaltbar aus oder erhalten aus einem Verfahren nach Anspruch 10.

22. Butyliertes Hemicelluloseprodukt, erhaltbar aus oder erhalten aus einem Verfahren nach Anspruch 15.

## Revendications

1. Procédé de transformation d'une charge d'alimentation lignocellulosique, le procédé comprenant:
le chauffage de la charge d'alimentation lignocellulosique dans un mélange de solvants comprenant un acide et au moins 80 % en volume de n-butanol pour produire un mélange de réaction incluant une lignine butylée.

2. Procédé selon la revendication 1, dans lequel le mélange de solvants comprend au moins 80 % en volume de n-butanol et un acide aqueux.

3. Procédé selon la revendication 1 ou la revendication 2, dans lequel le chauffage est poursuivi jusqu'à ce que la conversion en éthers de butyle des groupes fonctionnels d'hydroxyle benzylique des liaisons β-O-4 sur la lignine soit d'au moins 85 %, comme déterminé par une analyse RMN $^1H$-$^{13}C$-HSQC.

4. Procédé selon l'une quelconque des revendications précédentes, dans lequel l'acide employé dans le mélange de solvants est choisi dans le groupe constitué de: acide chlorhydrique (HCl), acide iodhydrique (HI), acide bromhydrique (HBr), acide perchlorique ($HClO_4$), acide nitrique ($HNO_3$), acide sulfurique ($H_2SO_4$) et des mélanges de ceux-ci.

5. Procédé selon l'une quelconque des revendications précédentes, dans lequel la concentration de l'acide dans le mélange de solvants est de 0,05 M à 3 M.

6. Procédé selon l'une quelconque des revendications précédentes, dans lequel la charge d'alimentation lignocellulosique est chauffée dans un mélange de solvants comprenant uniquement du n-butanol, de l'eau et l'acide.

7. Procédé selon l'une quelconque des revendications précédentes, dans lequel la charge d'alimentation lignocellulosique est une biomasse provenant d'arbres.

8. Procédé selon l'une quelconque des revendications précédentes, dans lequel la charge d'alimentation lignocellulosique est séchée à moins de 20 % d'humidité.

9. Procédé selon l'une quelconque des revendications précédentes, dans lequel le chauffage est réalisé au reflux et à la pression ambiante.

10. Procédé selon l'une quelconque des revendications précédentes, dans lequel, après l'étape de chauffage, le mélange de réaction est filtré pour retirer un produit de cellulose solide en laissant un filtrat contenant une lignine butylée.

11. Procédé selon la revendication 10, dans lequel un produit de lignine butylée est obtenu à partir du filtrat.

12. Procédé selon la revendication 11, dans lequel le produit de lignine butylée est obtenu par la concentration du filtrat, le mélange du résidu avec un solvant miscible avec l'eau et l'ajout du mélange résultant à de l'eau, pour précipiter le produit de lignine butylée.

13. Procédé selon la revendication 12, dans lequel de l'acétone ou un mélange d'acétone/eau est utilisé en tant que solvant miscible avec l'eau.

14. Procédé selon la revendication 13, dans lequel du sulfate de sodium est utilisé pour aider à la floculation du précipité de lignine butylée.

15. Procédé selon l'une quelconque des revendications 12 à 14, dans lequel un produit d'hémicellulose est obtenu à partir du filtrat restant après le retrait du produit de lignine butylée précipité.

16. Mélange de réaction comprenant une lignine butylée pouvant être obtenu à partir ou obtenu à partir d'un procédé selon l'une quelconque des revendications 1 à 10.

17. Produit de lignine butylée pouvant être obtenu à partir ou obtenu à partir d'un procédé selon la revendication 11.

18. Produit de lignine butylée selon la revendication 17, où au moins 85 % des liaisons β-O-4 incluent des groupes d'éther de n-butyle comme déterminé par une analyse RMN $^1H$-$^{13}C$-HSQC.

19. Produit de lignine butylée selon la revendication 18, où il y a au moins 20 liaisons β-O-4 pour 100 unités $C_9$ comme déterminé par RMN $^1H$-$^{13}C$-HSQC.

20. Produit de lignine butylée selon la revendication 17, où il y a au moins 20 liaisons β-O-4 pour 100 unités $C_9$ comme déterminé par RMN $^1H$-$^{13}C$-HSQC.

**21.** Produit de cellulose pouvant être obtenu à partir ou obtenu à partir d'un procédé selon la revendication 10.

**22.** Produit d'hémicellulose butylée pouvant être obtenu à partir ou obtenu à partir d'un procédé selon la revendication 15.

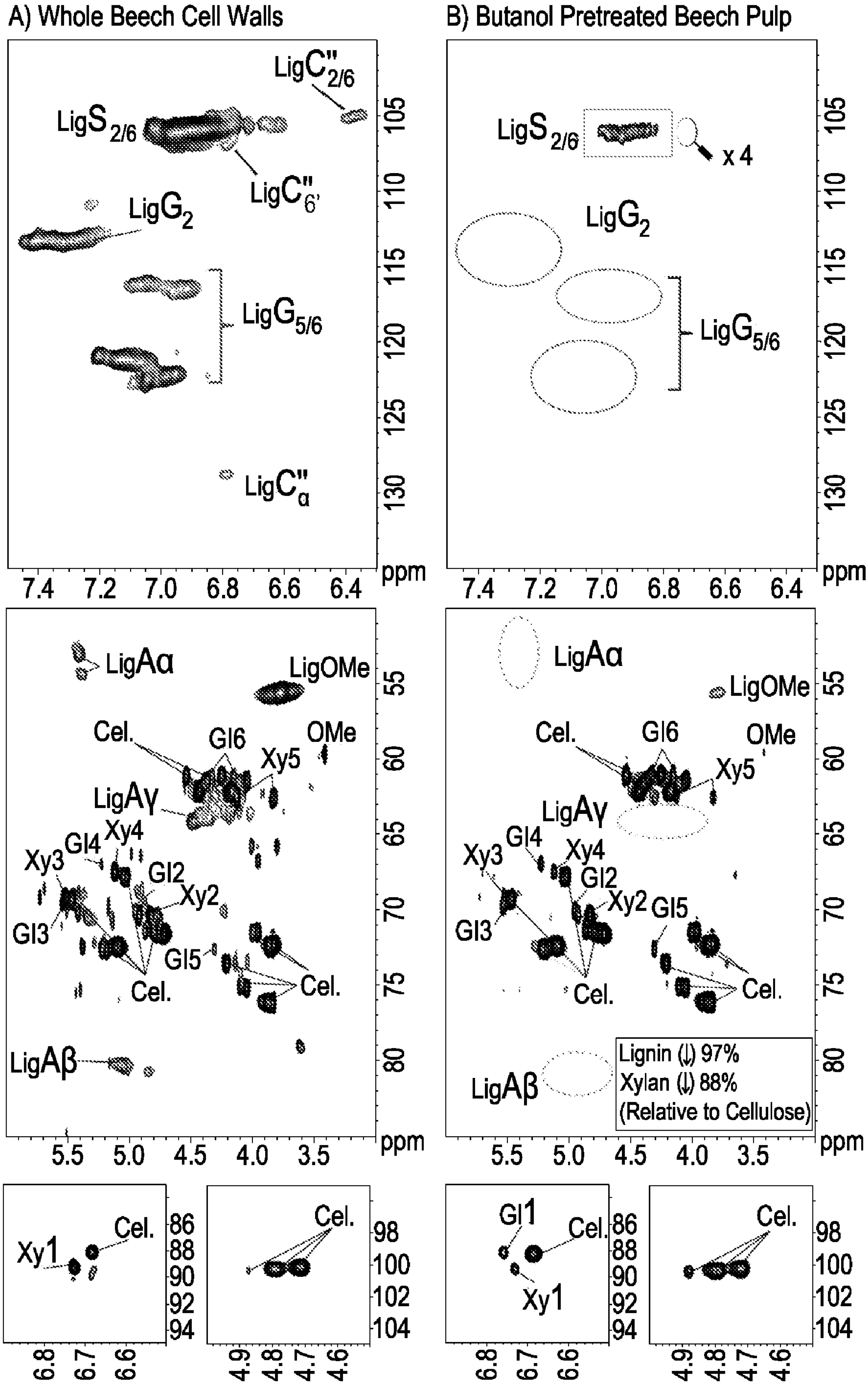
A) Whole Beech Cell Walls
B) Butanol Pretreated Beech Pulp
LigC"2/6
LigS2/6
LigC"6'
LigG2
LigG5/6
LigC"α
x 4
ppm
LigAα
LigOMe
Cel.
Gl6
OMe
Xy5
LigAγ
Gl4
Xy4
Xy3
Gl2
Xy2
Gl3
Gl5
LigAβ
Lignin (↓) 97%
Xylan (↓) 88%
(Relative to Cellulose)
Xy1
Gl1

Fig. 1a

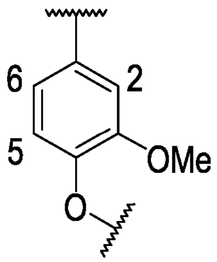

LigG

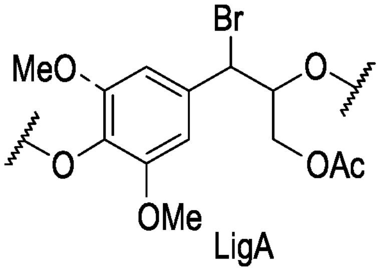

LigA

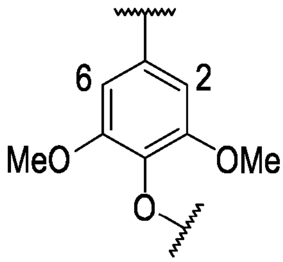

LigS

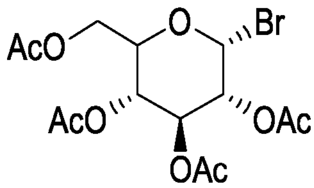

Gl = Glucose Derivative

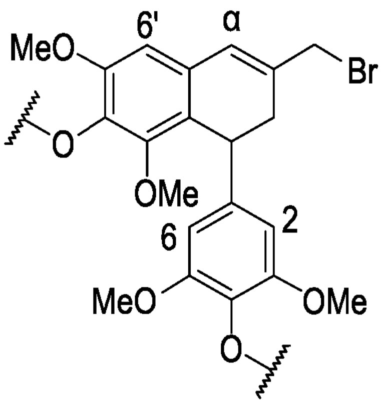

LigC''

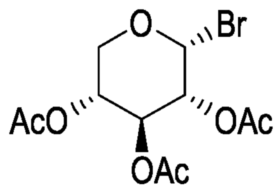

Xy = Xylose Derivative (from Xylan)

Cel. = Cellulose Derivatives

Fig. 1b

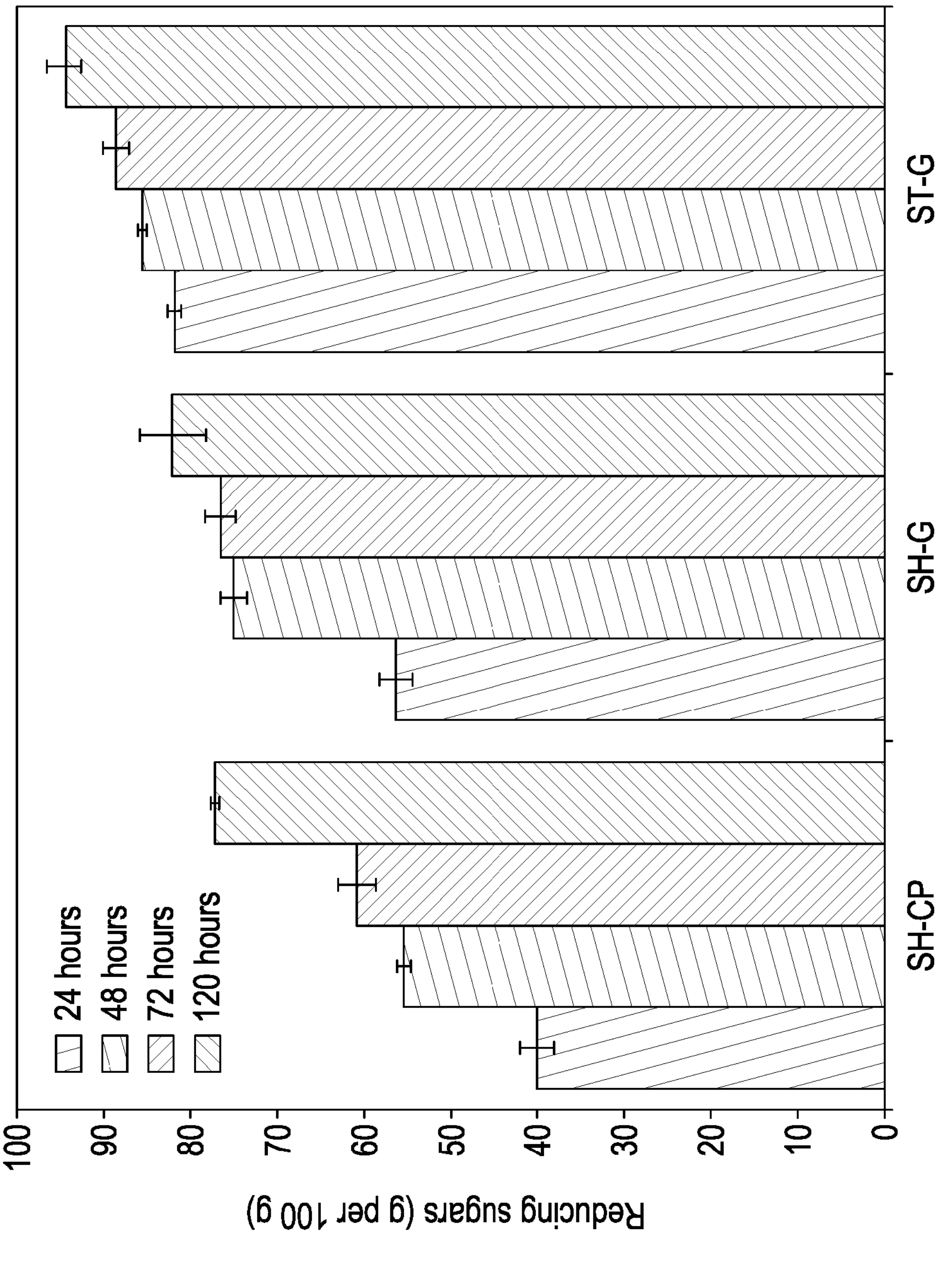
24 hours
48 hours
72 hours
120 hours
Reducing sugars (g per 100 g)
100
90
80
70
60
50
40
30
20
10
0
SH-CP
SH-G
ST-G

Fig. 2

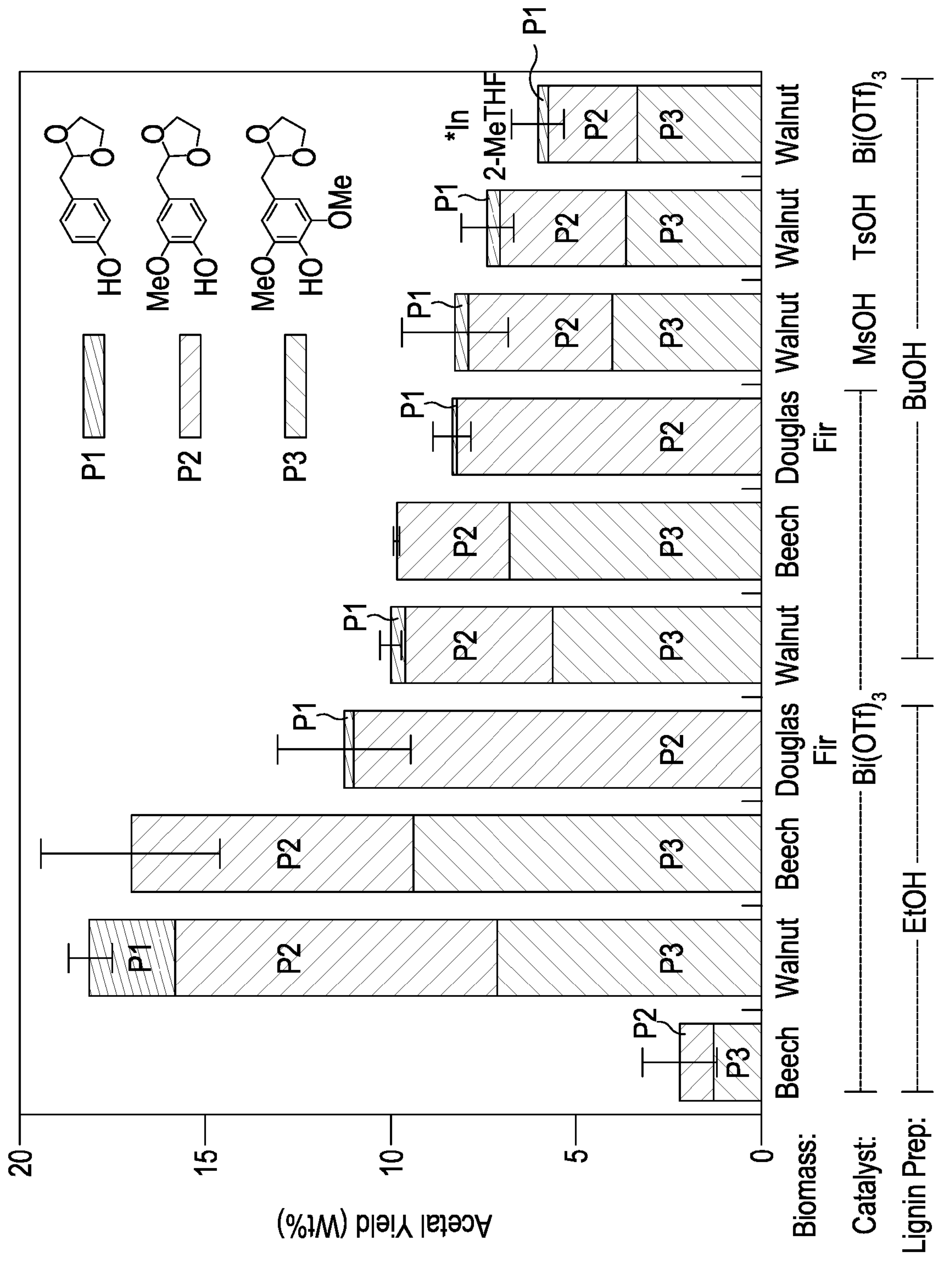
Acetal Yield (Wt%)
0
5
10
15
20
P1
P2
P3
HO
MeO
HO
MeO
HO
OMe
Biomass:
Catalyst:
Lignin Prep:
Beech
Walnut
Beech
Douglas Fir
Walnut
Beech
Douglas Fir
Walnut
Walnut
Walnut
*In 2-MeTHF
Bi(OTf)3
MsOH
TsOH
Bi(OTf)3
EtOH
BuOH

Fig. 3

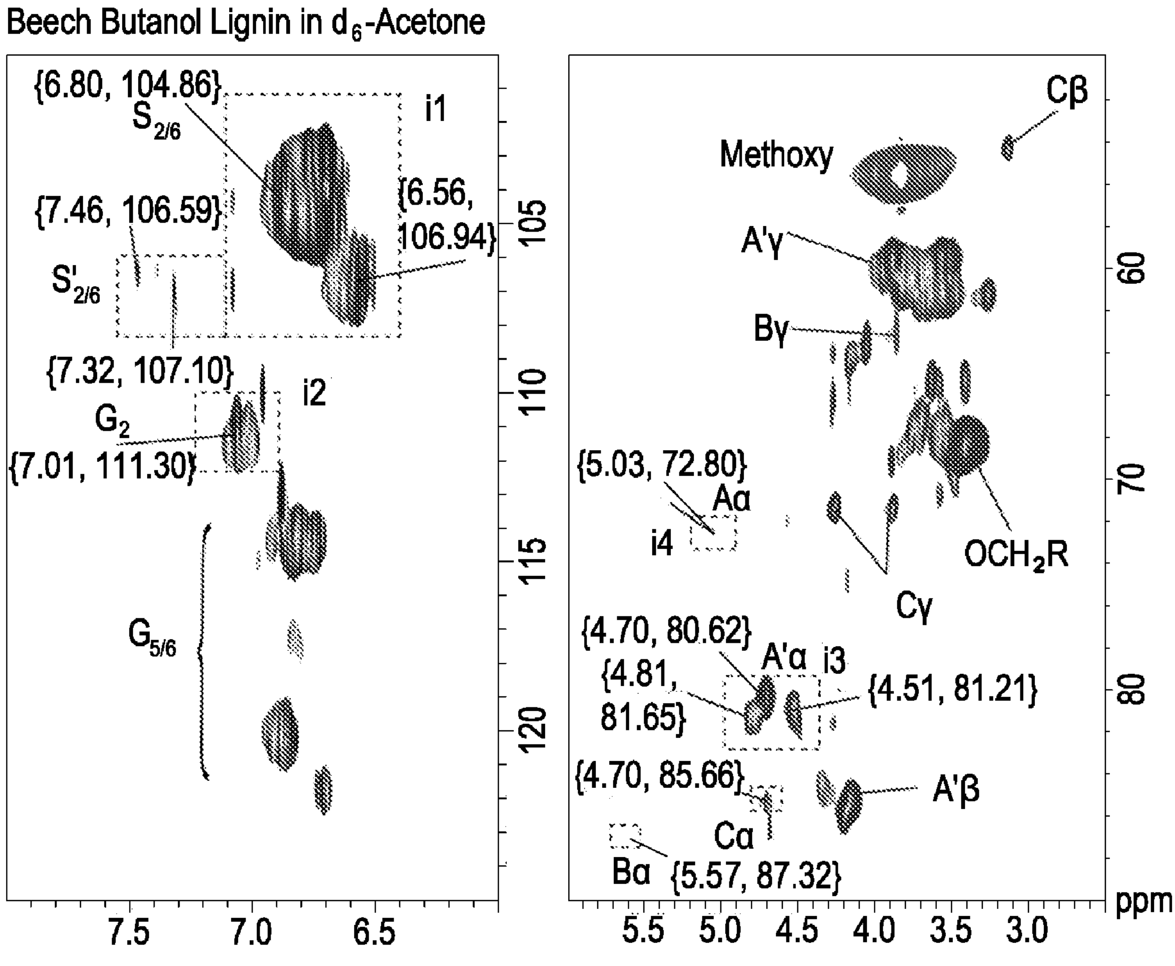

Beech Butanol Lignin in d6-Acetone
{6.80, 104.86}
S2/6
i1
{7.46, 106.59}
{6.56, 106.94}
S'2/6
{7.32, 107.10}
i2
G2
{7.01, 111.30}
G5/6
7.5
7.0
6.5
105
110
115
120
Cβ
Methoxy
A'γ
Bγ
{5.03, 72.80}
Aα
i4
OCH2R
Cγ
{4.70, 80.62}
A'α
i3
{4.81, 81.65}
{4.51, 81.21}
{4.70, 85.66}
A'β
Cα
Bα
{5.57, 87.32}
5.5
5.0
4.5
4.0
3.5
3.0
60
70
80
ppm


Fig. 4a

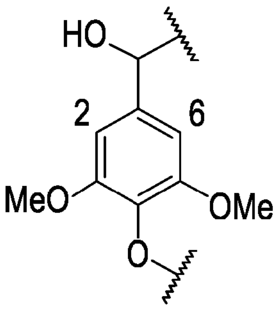

S

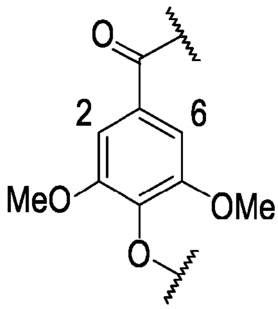

S'

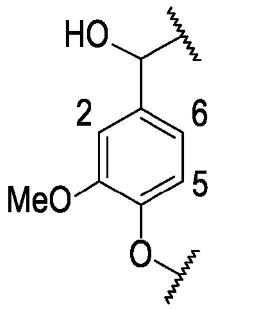

G

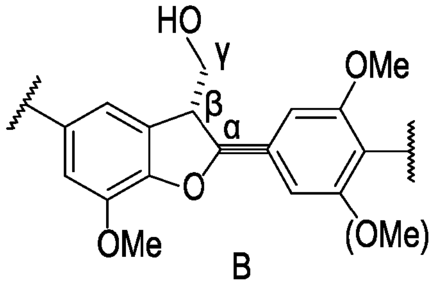

B

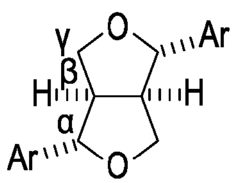

C

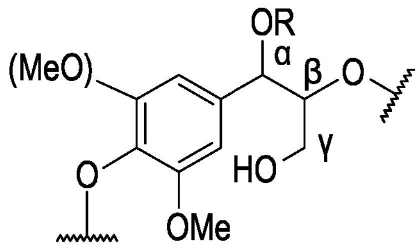

A'

(R = n-Butyl)

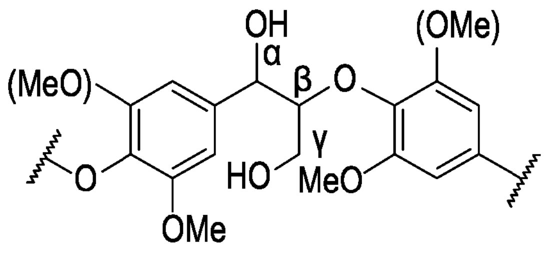

A(G/S-S)

i = Volume Integral

β-O-4-OR per 100 $C_9$ units = 100 x [ i3 / {(i1/2) + i2}]

β-O-4 per 100 $C_9$ units = 100 x [ i4 / {(i1/2) + i2}]

Fig. 4b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016027091 A


### Non-patent literature cited in the description


- **F. E. BRAUNS et al.** *Industrial and Engineering Chemistry,* 1945, vol. 37 (1), 70-73
- **L. F. DEL RIO.** *Appl Biochem Biotechnol,* 2010, vol. 161, 1-21
- **BAUER, S. ; SOREK, H. ; MITCHELL, V. D ; IBÁÑEZ, A. B. ; WEMMER, D. E.** *J. Agric. Food Chem.,* 2012, vol. 60, 8203
- **SHUAI, L. ; QUESTELL-SANTIAGO, Y. M. ; LUTERBACHER, J. S.** *Green Chem.,* 2016, vol. 18, 937
- **ANTAL, M. J. ; ALLEN, S. G ; DAI, X. ; SHIMIZU, B. ; TAM, M. S ; GRØNLI, M.** *Industrial & Engineering Chemistry Research,* 2000, vol. 39, 4024
- **LEE,J.** *Journal of Biotechnology,* 1997, vol. 56, 1
- **HUIJGEN, W. J. J ; TELYSHEVA, G. ; ARSHANITSA, A. ; GOSSELINK, R. J. A. ; DE WILD, P. J.** *Industrial Crops and Products,* 2014, vol. 59, 85
- **WILDSCHUT, J. ; SMIT, A. T. ; REITH, J. H ; HUIJGEN, W. J.** *J. Bioresour. Technol.,* 2013, vol. 135, 58
- **DEUSS, P. J. ; SCOTT, M. ; TRAN, F ; WESTWOOD, N. J ; DE VRIES, J. G ; BARTA, K. J.** *Am. Chem. Soc.,* 2015
- **LAHIVE, C. W. ; DEUSS, P. J. ; LANCEFIELD, C. S. ; SUN, Z. ; CORDES, D. B. ; YOUNG, C. M. ; TRAN, F ; SLAWIN, A. M. Z. ; DE VRIES, J. G. ; KAMER, P. C. J.** *J. Am. Chem. Soc,* 2016
- **TRAN, F ; LANCEFIELD, C. S ; KAMER, P. C. J ; LEBL, T ; WESTWOOD, N. J.** *Green Chem.,* 2015, vol. 17, 244